# EUROPEAN PATENT SPECIFICATION

(11) **EP 1 372 233 B1**
(45) Date of publication and mention of the grant of the patent: **26.08.2009**
(21) Application number: 03380125.9
(22) Date of filing: 27.05.2003
(51) Int. Cl.: H02G 3/04, H02G 11/00

(54) **Articulated canalisation for electrical conductors**
Gelenkkabelkanal
Canalisation articulée pour cables électriques

(30) Priority: 10.06.2002 ES 200201479 U
(43) Date of publication of application: 17.12.2003
(73) Proprietor: Unex Aparellaje Electrico S.L., 08903 L'Hospitalet de Llobregat (Barcelona) (ES)
(72) Inventor: Benito Navazo, Juan Manuel, 08290-Sant Cugat del Valles (Barcelona) (ES)
(74) Representative: Curell Aguilà, Marcelino

(56) References cited:
- CH-A- 681 585
- US-A- 5 900 586
- US-B1- 6 167 689

## Description

### Field of the invention

This invention relates to an articulated canalisation for electrical conductors, especially one to be used to guide a bundle of electrical conductors of different kinds, from an outlet point for energy supply and/or electrical signal transmission to an inlet point for same in a distributor that conducts such to the sundry receiver apparatuses.

### State of the art

There is known the problem which arises in modern office worktables due to the multiplication of electrical conductors necessary for proper functioning of the diverse apparatuses which, in our day and age, are needed to carry out office work in good conditions, causing arrival at the table of a plurality of electrical conductors, coming from one or several electrical, information technology, communications etc bases of supply, creating an indistinguishable tangle of cables on the floor that are liable to be damaged and which, obviously, constitute a real impediment and cause of mishap.

When offices were first mechanised, this problem was resolved by tying the various conductors in a bundle and attaching such with brackets lying to hand or designed for the purpose, or alternatively, such were sheathed in thin plastic tubing.

Said procedures suffered from the drawback that to withdraw or include a cable it was necessary to untie or unsheathe the entire bundle and, in such latter case, uncouple the connection plugs from the respective supply bases.

Cabling reglets with practicable covers, positioners and orientators for electrical conductors attached to the table itself etc, have also been designed.

Practice suggests that it would be desirable to have a device that would allow lodging of a bundle of electrical conductors of distinct kinds, which would separate energy conductors from signal conductors, which would facilitate the insertion or withdrawal, independently, of one or more conductors without affecting the rest nor uncoupling plugs, which would be insulating and which would adapt itself to any curved trajectory of the electrical conductors.

US-6167689-131 (Zemp AG) discloses an articulated canalisation constituted by the association in lineal succession of a plurality of members articulated with respect to each other. The articulated members have a part for retention of the electrical conductors and a mutual articulation part consisting in a rectangular plate which has couplig means arranged close to a first end of said plate and close to a second opposed end. The coupling means forms a free articulation according to an axis in the plane of each rectangular plate.

### Summary of the invention

In accordance with the above mentioned premises the solution adopted has been to constitute a canalisation based on segments articulated with respect to each other and arranged in lineal succession, like an earthworm.

Following the solution expounded above, the articulated canalisation for electrical conductors that is the subject of the invention has been developed, to be used in particular for guiding a bundle of electrical conductors of different kinds from an outlet point for energy supply and/or transmission of data or electrical signals to an inlet point for same in a distributor that conducts such to the sundry receiver apparatuses, said articulated canalisation being constituted by the association in lineal succession of a plurality of members articulated with respect to each other, similar to the links of a chain, where said articulated members have a part for mutual articulation and a part for retention of the electrical conductors, said mutual articulation part consisting in a plate which has means for male coupling arranged close to a first end of said plate and means for coupling arranged close to a second end diametrically opposed to said first end, the male coupling means of each plate being suitable for coupling in free articulation with the female coupling means of another plate, and in that said part for retaining the electrical conductors consists in at least an elastic arc which, diametrically crossing said plate, emerges from a rim of one face of said plate and rests against, in a practicable manner, the immediate area of the opposite rim of said face to form a discontinuous cradle for the electrical conductors; said articulated canalisation according to the invention being characterised by the characterising features of chaim 1.

Preferably, said part for retaining the electrical conductors consists in two elastic arcs which each emerge from a rim of one and the other face of said plate and which rest against, in a practicable manner, the immediate area of the opposite rim of the same face.

Advantageously, said elastic arcs comprise in their free ends elbowed stretches with which said arcs bear against the faces of said plate.

Preferably, said male coupling means are constituted by a teat with a retaining boss situated at its free end and said female coupling means are constituted by a circular through hole.

As a preferable variant, said plate has a step which separates said plate in a first halfdisk and a second halfdisk, in which said female coupling means are constituted by a circular through hole arranged in the immediate area of the rim of said second halfdisk and in a centred position with respect to said step, and said means of male coupling are arranged in said first halfdisk, in a position diametrically opposed to that of said circular through hole, and consist in a long slide aperture over which extends a cantilevered arm terminated in a teat facing the corresponding face of said first halfdisk, in which said cantilevered arm is preferably separated from the face of said first halfdisk facing said teat by a distance substantially equal to the thickness of said second halfdisk. The above mentioned step is substantially diametrical, being able to be slightly displaced from an exact diameter of the plate to leave room for the joint between said plate and the above mentioned arcs.

Advantageously, said step has, juxtaposed in the entire length thereof, respective riser indentations in the form of concave arcs orientated towards said circular through hole and which constitute articulation stop seats for each two of said coupled plates.

Optionally, said part for retention is constituted by an independent monopiece which forms said two arcs and is provided with interlocking means, and said plate has close to said step a notch provided for the interlocking by pressure of said interlocking means, in which said notch preferably is of rectangular shape and has two triangular prismatic projections, arranged in the manner of a harpoon prong, which exteriorly flank the base of said notch.

Preferably, said means of interlocking by pressure of the independent monopiece consist in a slight central narrowing, which allows the adjustment thereof in said notch of said plate, and two transverse dogs which, situated at the limits of said narrowing, may be coupled by clipping in said triangular prismatic projections which are provided in said notch.

Additionally, optionally, end articulated members are provided which have means for attachment to the points of outlet of supply and/or transmission and inlet to a distributor.

Preferably, one of said end articulated members has only female coupling means, whilst the other of said end articulated members has only male coupling means, said end articulated members consisting in an end halfdisk whose diameter is solid with a face of a base disk which has, at one and the other sides of said end halfdisk, different apertures for the selective passage of electrical conductors.

Advantageously, said means of attachment of the end articulated members consist in securement dogs arranged with respect to the face of said base disk opposed to that which is solid with said end halfdisk.

Advantageously, the female coupling means of one of the end articulated members consists in a long slide aperture situated radially in the centre of said end halfdisk, whilst the male coupling means of the other end articulated member are equal to those arranged in the rest of the articulated members which constitute the canalisation.

### Brief description of the drawings

To facilitate understanding of the preceding ideas, the following is a description of a preferred embodiment of the invention, with reference to the accompanying illustrative drawings, in which:
Figure 1, represents, in perspective, a first simplistic embodiment of a component member of a canalisation for electrical conductors, embodied according to the invention.
Figure 2, represents, in perspective, an articulated canalisation constituted by a plurality of members such as in the previous Figure, coupled in an articulated manner and in lineal succession.
Figure 3, represents, in perspective, the articulation part of a component member of the canalisation according to the invention, shaped in accordance with a second preferred embodiment of the same.
Figure 4, represents, in perspective, the retention part which is complemented by the articulation part of Figure 3.
Figure 5, represents, from a different perspective, the articulation part of Figure 3.
Figure 6, represents, in perspective, the member resulting from the coupling of the articulation and retention parts of the above Figures 3 and 4.
Figure 7, represents a top plan view of the articulation member illustrated in Figure 6.
Figure 8, represents a detail of the coupling between the articulation and the retention parts of the member of Figure 6.
Figure 9, represents, in perspective, a very short articulated canalisation according to the invention, in which is shown the two end articulated members separate from said short articulated canalisation.
Figure 10, represents, in diametric section, the member of Figure 6 articulated with two adjacent members.
Figure 11, represents, in perspective, the arrangement of the articulated canalisation according to the invention installed between a worktable and a connections pillar.

### Detailed description of some embodiments of the invention

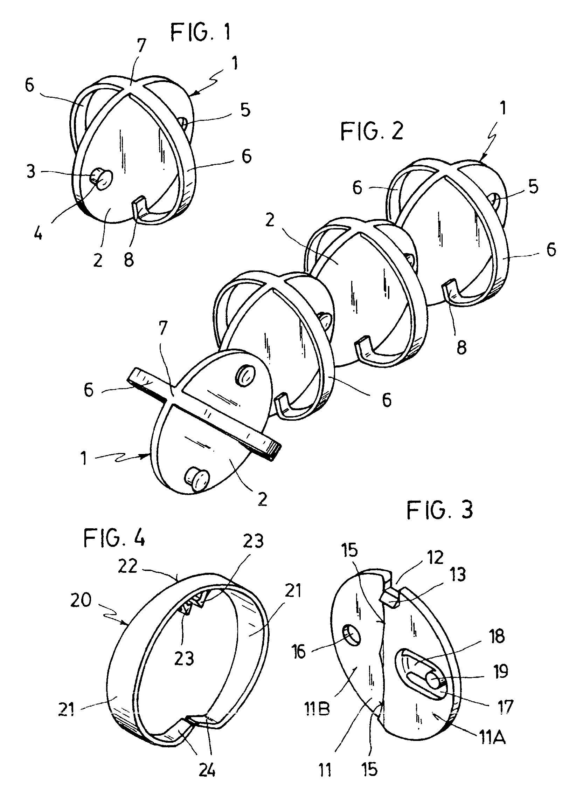

The articulated canalisation for electrical conductors, which is the subject of the invention, is shown, in a first simplistic embodiment, in Figures 1 and 2, in which the first Figure represents a simple isolated member, whilst the second represents a few simple members articulated with respect to each other in order to constitute the beginnings of an articulated canalisation.

In Figure 1, the above mentioned simple member, which will be referred to below as articulated member 1 because it is always articulated in the canalisation according to the invention, is differentiated by a part designed for mutual articulation and by a part designed for the retention of the electrical conductors, which parts shall be elucidated in greater detail below.

The above mentioned part designed for mutual articulation consists in a discoid plate 2 which simultaneously has means for male coupling, embodied by a teat 3 with retentive boss 4, and means of female coupling, embodied by a circular through hole 5, whose diameter is larger than the diameter of teat 3 and smaller than the diameter of the retentive boss 4 of teat 3, the shaping and/or material of said means allowing coupling.

The above mentioned part designed for retention of the electrical conductors consists in two elastic arcs 6 which emerge from a rim of one and the other face of the discoid plate 2, in a same point 7 of the edge of said discoid plate 2, and by means of an inward bent elbow 8 rest, in a practicable manner, against a point of the same face opposite to the point of emergence.

As may be observed in Figure 2, the canalisation is constituted by the association in lineal succession of a plurality of articulated members 1 interconnected with a certain rotational freedom, by loose insertion of the teats 3 in the holes 5 once the resistance which the retentive bosses 4 of such teats encounter when traversing said holes 5 has been overcome, elastically, after which the articulation of two of said articulated members 1 may not be accidentally disassembled.

An articulated canalisation arrangement such as illustrated in the above mentioned Figure 2 allows the adoption of almost any rectilinear, curvilinear or combined position, and by means of the arcs 6, the retention to one and the other face of the discoid plates 2, of a plurality of electrical conductors, not illustrated in the drawings, which shall be expressly retained by the elasticity of said arcs 6 and by the arrangement in said arcs of the inward elbowed stretches 8, allowing, nevertheless the extraction or the introduction of electrical conductors in an independent manner, merely needing to force said arcs 6 in one direction or another, without it being necessary, as such is necessary in known devices for such purposes, to thread, to force or to string the electrical conductors from one end to another through the interior of the arcs 6, nor to dismount the connection plugs of same.

The articulated member 1 illustrated in its most elemental form in Figures 1 and 2, necessitates complicated manufacture by moulding of synthetic plastics materials and highly difficult coupling, which is the reason for adopting the constructive form of Figures 3 and 4 which correspond, respectively, to the part designed for mutual articulation and the part designed for retention of the electrical conductors.

The solution adopted, as may be understood by reference to the above mentioned Figures 3 and 4, consists in separately moulding each one of said articulation and retention parts and providing them with means that allow easy coupling of both parts in order to obtain an articulated member 10 which presents constructive advantages and advantages in use.

In Figure 3 is illustrated a preferred embodiment of the solution expounded above, in which one may observe an articulation part which is formed by a discoid plate 11 and in Figure 4 one may observe the retention part which is formed by an independent monopiece in the shape of an open hoop 20.

The discoid plate 11 has a rectangular notch 12, which is flanked on both faces of the base thereof by two triangular prismatic projections 13 arranged similarly to a harpoon prong. As from one side of said notch 12, the discoid plate 11 is bent forming a substantially diametrical step 14 which separates said discoid plate 11 in a first halfdisk or larger segment 11A and a second halfdisk or smaller segment 11B.

The step 14 has respective riser indentations 15 in the form of ample arcs of equal concavity directed towards the rim of the said smaller segment 11B, in whose centre are found the means of female coupling which are embodied, as in the case previously described, by a circular through hole 16.

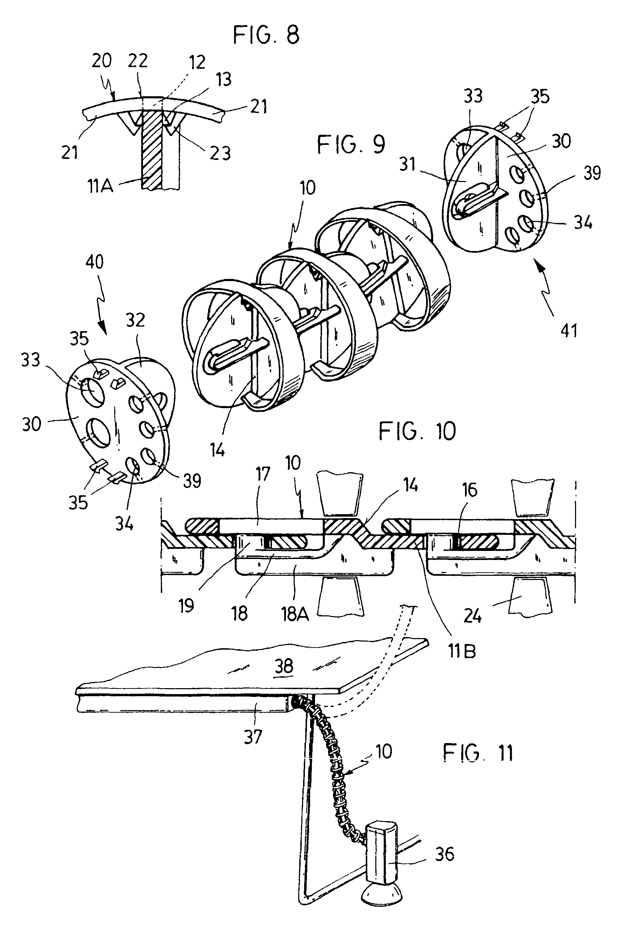

With respect to the larger segment 11A it has, centred and in radial orientation, a long slide aperture 17 over which extends a cantilevered arm 18 terminating in a teat 19 as means of male coupling, said arm 18 being separated from the corresponding halfdisk by a distance equal to the thickness of the discoid plate 11 in its smaller segment 11B, whilst said arm 18 has a dorsal rib 18A for stiffening, as is illustrated in Figure 10.

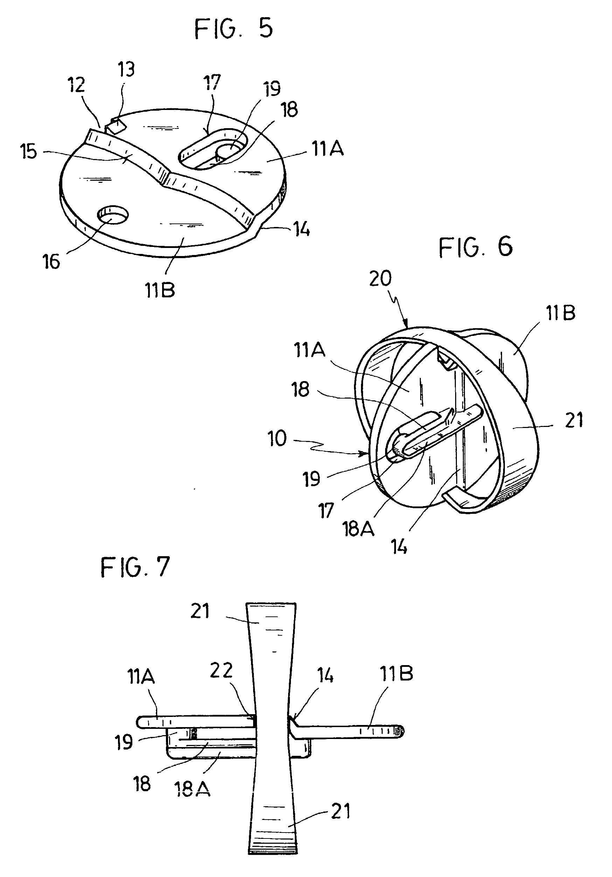

The open hoop 20, as is illustrated in Figure 4, is constituted by a monopiece which forms the two arcs 21 of the retention part and has a slight central narrowing 22, as is illustrated in Figure 7, allowing its adjustment in the notch 12 of the discoid plate 11, two transverse dogs 23 which, situated at the limits of said narrowing 22 and in opposition, may be coupled by clipping in the prismatic projections 13 of the above mentioned discoid plate 11, as may be observed in Figure 8, and two elbowed free ends 24.

Additionally, the articulated canalisation includes respective end articulated members provided with means of coupling to the outlet points of supply and/or transmission and of inlet to a distributor device, as is illustrated in Figure 9.

Of these end means of articulation, one 40 of them has only means of female coupling to an articulated member 10, whilst the other 41 only has means of male coupling.

The end articulated members, as may be observed in Figure 8, are constituted by a base disk 30 which is solid diametrically with an end male halfdisk 31, should it be for coupling to the means of female coupling of a discoid plate 11, corresponding to an articulated member 10, and an end female halfdisk 32, should it be for coupling to the means of male coupling of a discoid plate 11 of an articulated member 10.

The base disk 30 is provided with a plurality of apertures 33 and 34 of different diameters, situated on one side and another of the end male halfdisk 31 or female halfdisk 32, for the selective positioning of the same, destining the apertures 33 of larger diameter for the passage of power conductors and the apertures 34 of smaller diameter for the passage of telephony, telematic conductors etc. of low voltage. Such apertures 33 and 34 may have radial channels 39 of weak pre-cut in order to be able to open said channels if necessary for the passage of cables once the canalisation has been assembled.

Similarly, the base disk 30 is provided, with respect to the face opposed to that of the end halfdisks 31 and 32, with dogs 35 for securing to the outlet points, such as the pillar 36 of Figure 11, and inlet points, such as the distributor device 37 secured to the table 38 of the same Figure.

The coupling means provided in the end male halfdisk 31 and female halfdisk 32, consist in the same means provided in the articulated members 10, although the female means hole 16 may be formed in the shape of a slide aperture as in that referenced 17 for the means of male coupling.

## Claims

1. Articulated canalisation for electrical conductors constituted by the association in lineal succession of a plurality of members articulated with respect to each other, in which said articulated members (1, 10) have a mutual articulation part and a part for retention of the electrical conductors, said mutual articulation part consisting in a plate (2, 11) which has means of male coupling (3, 19) arranged close to a first end of said plate (2, 11) and means of female coupling (5, 16) arranged close to a second end diametrically opposed to said first end, said means of male coupling (3, 19) of each plate (2, 11) being suitable for their coupling in free articulation with said means of female coupling (5, 16) of another plate (2, 11), and said part for retention of the electrical conductors consisting in at least an elastic arc (6, 21) which, diametrically crossing said plate (2, 11), emerges from a rim of one face of said plate (2, 11) and rests, in a practicable manner, against the immediate area of the opposite rim of said face, **characterised in that** said plate (2, 11) is discoidal and said means of male coupling (3, 19) and said means of female coupling (5, 16) are arranged so that the coupling therebetween forms a rotational articulation with a rotational axis perpendicular to the plane of said discoidal plate (2, 11).

2. Articulated canalisation according to claim 1, **characterised in that** said part for retention of the electrical conductors consists in two elastic arcs (6, 21) which each emerge from a rim of one and the other face of said plate (2, 11) and which rest, in a practicable manner, against the immediate area of the opposite rim of same face.

3. Articulated canalisation according to claim 2, **characterised in that** said elastic arcs (6, 21) include in their free ends elbowed stretches (8, 24) by which said elastic arcs (6, 21) bear against the faces of said plate (2, 11).

4. Articulated canalisation according to any of the claims 1 to 3, **characterised in that** said male coupling means are constituted by a teat (3) With a retentive boss (4) situated at the free end thereof and said means of female coupling are constituted by a circular through hole (5).

5. Articulated canalisation according to claims 2 or 3, **characterised in that** said plate (11) has a step (14) which separates said plate (11) in a first halfdisk (11A) and a second halfdisk (11B), in which said means of female coupling are constituted by a circular through hole (16) arranged in the immediate area of the rim of said second halfdisk (11 B) and in centred position with respect to said step (14), and said means of male coupling are arranged in said first halfdisk (11A), in position diametrically opposed to that of said circular through hole (16), and consist in a long slide aperture (17) over which extends a cantilevered arm (18) terminating in a teat (19) facing the corresponding face of said first halfdisk (11A).

6. Articulated canalisation according to claim 5, **characterised in that** said cantilevered arm (18) is separated from the face of said first halfdisk (11A) face to face with said teat (19) by a distance substantially equal to the thickness of said second halfdisk (11 B).

7. Articulated canalisation according to claim 6, **characterised in that** said step (14) has, juxtaposed in the entire length of such, respective riser indentations (15) in the form of concave arcs orientated towards said circular through hole (16) and which constitute articulation stop seating for each two of said coupled plates (11).

8. Articulated canalisation according to any of the claims 2 to 7, **characterised in that** said retention part is constituted by an independent monopiece (20) which forms said two arcs (21) and has means of interlocking (22, 23), and said plate (11) has close to said step (14) a notch (12) provided for the interlocking by pressure of said means of interlocking (22, 23).

9. Articulated canalisation according to claim 8, **characterised in that** said notch (12) is of rectangular shape and has two triangular prismatic projections (13), arranged in the manner of a harpoon prong, which exteriorly flank the base of said notch (12).

10. Articulated canalisation according to claim 9, **characterised in that** said means of interlocking by pressure of the independent monopiece (20) consist in a slight central narrowing (22), which allows its adjustment in said notch (12) of said plate (11), and two transverse dogs (23) which, situated at the limits of said narrowing (22), may be coupled by clipping with respect to said triangular prismatic projections (13) provided at said notch (12).

11. Articulated canalisation according to any of claims 1 to 10, **characterised in that** end articulated members (40, 41) are provided which have means of attachment (35) to the outlet points of supply (36) and/or transmission and of inlet to a distributor (37).

12. Articulated canalisation according to claim 11, **characterised in that** one (40) of said end articulated members has only female coupling means, whilst the other (41) of said end articulated members has only male coupling means, said end articulated members (40, 41) consisting in an end halfdisk (31, 32) whose diameter is solid with a face of a base disk (30) which has, on one and the other side of said end halfdisk (31, 32) different apertures (33, 34) for the selective passage of electrical conductors.

13. Articulated canalisation according to claim 12, **characterised in that** said means of attachment (35) of the end articulated members (40, 41) consist in securement dogs (35) arranged on the face of said base disk (30) opposed to that which is solid with said end halfdisk (31, 32).

14. Articulated canalisation according to claims 12 or 13, **characterised in that** the female coupling means of one (40) of the end articulated members consist in a long slide aperture situated radially in the centre of said end halfdisk, whilst the male coupling means of the other (41) end articulated member are equal to those arranged in the rest of the articulated members which constitute the canalisation.

## Patentansprüche

1. Gelenkkanal für elektrische Leiter, gebildet durch die Verbindung einer Vielzahl von Elementen, die in Bezug zueinander gelenkig sind, in geradliniger Folge, wobei die gelenkigen Elemente (1, 10) einen wechselseitigen Gelenkteil und einen Teil zum Halten der elektrischen Leiter aufweisen, wobei der wechselseitige Gelenkteil eine Platte (2, 11) umfasst, die Mittel einer Steckerkupplung (3, 19), die nahe einem ersten Ende der Platte (2, 11) angeordnet sind, und Mittel einer Buchsenkupplung (5, 16), die nahe einem zweiten Ende diametral gegenüberliegend dem ersten Ende angeordnet sind, aufweist, wobei die Mittel der Steckerkupplung (3, 19) jeder Platte (2, 11) für ihre Kopplung in freier Gelenkverbindung mit den Mitteln der Buchsenkupplung (5, 16) einer weiteren Platte (2, 11) geeignet sind, wobei der Teil zum Halten der elektrische Leiter wenigstens einen elastischen Bogen (6, 21) umfasst, der die Platte (2, 11,) diametral kreuzend von einem Rand einer Fläche der Platte (2, 11) ausgeht und in einer zweckmäßigen Weise an dem unmittelbaren Bereich des gegenüberliegenden Randes der Fläche anliegt, **dadurch gekennzeichnet, dass** die Platte (2, 11) scheibenförmig ist und die Mittel der Steckerkupplung (3, 19) und die Mittel der Buchsenkupplung (5, 16) so angeordnet sind, dass die Kopplung zwischen diesen ein Rotationsgelenk mit einer Rotationsachse senkrecht zur Ebene der scheibenförmigen Platte (2, 11) bildet.

2. Gelenkkanal nach Anspruch 1, **dadurch gekennzeichnet, dass** der Teil zum Halten der elektrischen Leiter zwei elastische Bögen (6, 21) umfasst, die jeweils von einem Rand einer und einer weiteren Fläche der Platte (2, 11) ausgehen und in zweckmäßiger Weise an dem unmittelbaren Bereich des gegenüberliegenden Randes derselben Fläche anliegen.

3. Gelenkkanal nach Anspruch 2, **dadurch gekennzeichnet, dass** die elastischen Bögen (6. 21) in ihren freien Enden gekröpfte Strecken (8, 24) enthalten, mit denen die elastischen Bögen (6, 21) auf den Flächen der Platte (2, 11) ruhen.

4. Gelenkkanal nach irgendeinem der Ansprüche 1 bis 3, **dadurch gekennzeichnet, dass** die Steckerkupplungsmittel von einem Nippel (3) mit einem runden Haltevorsprung (4), der an dessen freiem Ende angeordnet ist, gebildet werden und die Mittel der Buchsenkupplung von einem kreisförmigen Durchgangsloch (5) gebildet werden.

5. Gelenkkanal nach Anspruch 2 oder 3, **dadurch gekennzeichnet, dass** die Platte (11) eine Stufe (14) aufweist, die die Platte (11) in eine erste Halbplatte (11A) und ein zweite Halbplatte (11B) trennt, wobei die Mittel der Buchsenkupplung von einem kreisförmigen Durchgangsloch (16) gebildet werden, das im unmittelbaren Bereich des Randes der zweiten Halbscheibe (11B) und in zentrierter Position bezüglich der Stufe (14) angeordnet ist, und die Mittel der Steckerkupplung in der ersten Halbscheibe (11A) in einer Position diametral gegenüberliegend dem kreisförmigen Durchgangsloch (16) angeordnet sind und eine lange Gleitöffnung 17 umfassen, über die sich ein auslandender Arm (18) erstreckt, der in einem Nippel (19) endet, der der entsprechenden Fläche der ersten Halbscheibe (11A) zugewandt ist.

6. Gelenkkanal nach Anspruch 5, **dadurch gekennzeichnet, dass** der ausladende Arm (18) von der Fläche der ersten Halbscheibe (11A) dem Nippel (19) gegenüberliegend durch einen Abstand im Wesentlichen gleich der Dicke der zweiten Halbscheibe (11 B) getrennt ist.

7. Gelenkkanal nach Anspruch 6, **dadurch gekennzeichnet, dass** die Stufe (14) nebeneinanderliegend über ihre gesamte Länge entsprechende Anstiegseinbuchtungen (15) in Form konkaver Bögen, die in Richtung zum kreisförmigen Durchgangsloch (16) ausgerichtet sind und einen Gelenkanschlagsitz für jeweils zwei der gekoppelten Platten (11) bildet, aufweist.

8. Gelenkkanal nach irgendeinem der Ansprüche 2 bis 7, **dadurch gekennzeichnet, dass** der Halteteil von einem unabhängigen Einzelstück (20) gebildet wird, das die zwei Bögen (21) bildet und Verriegelungsmittel (22, 23) aufweist, wobei die Platte (11) nahe der Stufe (14) eine Kerbe (12) aufweist, die für ein Verriegeln mittels Druck mit dem Verriegelungsmittel (22, 23) vorgesehen ist.

9. Gelenkkanal nach Anspruch 8, **dadurch gekennzeichnet, dass** die Kerbe (12) eine rechteckige Form aufweist und zwei dreieckige prismenförmige Vorsprünge (13) aufweist, die in der Art einer Harpunenzinke angeordnet sind und die Basis der Kerbe (12) außen flankieren.

10. Gelenkkanal nach Anspruch 9, **dadurch gekennzeichnet, dass** die Mittel zum Verriegeln mittels Druck des unabhängigen Einzelstücks (20) eine leichte zentrale Verengung (22), die ihre Einstellung in der Kerbe (12) der Platte (11) erlaubt, sowie zwei querverlaufende Nasen (23) aufweisen, die an den Grenzen der Verengung (22) angeordnet durch Einhängen bezüglich der dreieckigen prismenförmigen Vorsprünge (13), die an der Kerbe (12) vorgesehen sind, verbunden werden können.

11. Gelenkkanal nach irgendeinem der Ansprüche 1 bis 10, **dadurch gekennzeichnet, dass** End-Gelenkelemente (40, 41) vorgesehen sind, die Mittel zur Anbringung (35) an den Auslasspunkten eines Netzteils (36) und/oder einer Weiterleitung und eines Einlasses in einen Verteiler (37) aufweisen.

12. Gelenkkanal nach Anspruch 11, **dadurch gekennzeichnet, dass** eines (40) der End-Gelenkelemente nur Buchsenkupplungselemente aufweist, während das andere (41) der End-Gelenkelemente nur Steckerkupplungselemente aufweist, wobei die End-Gelenkelemente (40, 41) eine End-Halbscheibe (31, 32) umfassen, deren Durchmesser massiv ist mit einer Fläche einer Basisscheibe (30), die auf der einen und der anderen Seite der End-Halbscheibe (31, 32) unterschiedliche Öffnungen (33, 34) zum selektiven Durchlassen elektrischer Leiter aufweist.

13. Gelenkkanal nach Anspruch 12, **dadurch gekennzeichnet, dass** die Mittel zur Anbringung (35) der End-Gelenkelemente (40, 41) Sicherungsnasen (35) umfassen, die auf der Fläche der Basisscheibe (30) gegenüberliegend derjenigen, die massiv mit der End-Halbschiebe (31, 32) ausgebildet ist, angeordnet ist.

14. Gelenkkanal nach Anspruch 12 oder 13, **dadurch gekennzeichnet, dass** die Buchsenkupplungsmittel des einen (40) der End-Gelenkelemente eine lange Gleitöffnung umfassen, die radial in der Mitte der End-Halbscheibe angeordnet ist, während die Steckerkupplungsmittel des anderen (41) End-Gelenkelements denjenigen entsprechen, die im Rest der Gelenkelemente angeordnet sind, die den Kanal bilden.

## Revendications

1. Canalisation articulée pour conducteurs électriques constituée par l'association en succession linéaire d'une pluralité d'éléments articulés les uns par rapport aux autres, dans laquelle lesdits éléments articulés (1, 10) possèdent une partie d'articulation mutuelle et une partie pour la retenue des conducteurs électriques, ladite partie d'articulation mutuelle étant constituée d'une plaque (2, 11) qui possède des moyens de couplage mâle (3, 19) agencés près d'une première extrémité de ladite plaque (2, 11) et des moyens de couplage femelle (5, 16) agencés près d'une seconde extrémité opposée diamétralement à ladite première extrémité, lesdits moyens de couplage mâle (3, 19) de chaque plaque (2, 11) étant appropriés pour leur couplage en articulation libre avec lesdits moyens de couplage femelle (5, 16) d'une autre plaque (2, 11), et ladite partie pour la retenue des conducteurs électriques étant constituée d'au moins un arc élastique (6, 21) qui, traversant diamétralement ladite plaque (2, 11), sort d'un pourtour d'une face de ladite plaque (2, 11) et repose, de manière pratique, contre la zone immédiate du pourtour opposé de ladite face, **caractérisée en ce que** ladite plaque (2, 11) est discoïde et lesdits moyens de couplage mâle (3, 19) et lesdits moyens de couplage femelle (5, 16) sont agencés de sorte que le couplage entre ceux-ci forme une articulation rotative avec un axe de rotation perpendiculaire au plan de ladite plaque discoïde (2, 11).

2. Canalisation articulée selon la revendication 1, **caractérisée en ce que** ladite partie pour la retenue des conducteurs électriques est constituée de deux arcs élastiques (6, 21) qui sortent chacun d'un pourtour d'une et de l'autre face de ladite plaque (2, 11) et qui reposent, de manière pratique, contre la zone immédiate du pourtour opposé de la même face.

3. Canalisation articulée selon la revendication 2, **caractérisée en ce que** lesdits arcs élastiques (6, 21) comprennent dans leurs extrémités libres des étirements coudés (8, 24) par lesquels lesdits arcs élastiques (6, 21) prennent appui contre les faces de ladite plaque (2, 11).

4. Canalisation articulée selon une quelconque des revendications 1 à 3, **caractérisée en ce que** lesdits moyens de couplage mâle sont constitués par un téton (3) avec un bossage de retenue (4) situé à l'extrémité libre de celui-ci et lesdits moyens de couplage femelle sont constitués par un orifice de passage circulaire (5).

5. Canalisation articulée selon les revendications 2 ou 3, **caractérisée en ce que** ladite plaque (11) possède un épaulement (14) qui sépare ladite plaque (11) en un premier demi-disque (11A) et un second demi-disque (11B), dans laquelle lesdits moyens de couplage femelle sont constitués par un orifice de passage circulaire (16) agencé dans la zone immédiate du pourtour dudit second demi-disque (11B) et dans une position centrée par rapport audit épaulement (14), et lesdits moyens de couplage mâle sont agencés dans ledit premier demi-disque (11A), dans une position opposée diamétralement à celle dudit orifice de passage circulaire (16), et sont constitués d'une ouverture de coulissement longue (17) sur laquelle s'étend un bras en porte-à-faux (18) se terminant en un téton (19) faisant face à la face correspondante dudit premier demi-disque (11A).

6. Canalisation articulée selon la revendication 5, **caractérisée en ce que** ledit bras en porte-à-faux (18) est séparé de la face dudit premier demi-disque (11A) en face à face avec ledit téton (19) selon une distance sensiblement égale à l'épaisseur dudit second demi-disque (11B).

7. Canalisation articulée selon la revendication 6, **caractérisée en ce que** ledit épaulement (14) possède, juxtaposées dans la longueur entière de celui-ci, des indentations montantes respectives (15) sous forme d'arcs concaves orientés vers ledit orifice de passage circulaire (16) et qui constituent une assise d'arrêt d'articulation pour chaque paire desdites plaques couplées (11).

8. Canalisation articulée selon une quelconque des revendications 2 à 7, **caractérisée en ce que** ladite partie de retenue est constituée par une pièce unique indépendante (20) qui forme lesdits deux arcs (21) et possède des moyens d'enclenchement (22, 23), et ladite plaque (11) possède, près dudit épaulement (14), une encoche (12) prévue pour l'enclenchement par pression desdits moyens d'enclenchement (22, 23).

9. Canalisation articulée selon la revendication 8, **caractérisée en ce que** ladite encoche (12) est de forme rectangulaire et possède deux saillies prismatiques triangulaires (13), agencées à la manière d'une dent de harpon, qui se trouvent extérieurement sur les côtés de la base de ladite encoche (12).

10. Canalisation articulée selon la revendication 9, **caractérisée en ce que** lesdits moyens d'enclenchement par pression de la pièce unique indépendante (20) sont constitués d'un léger rétrécissement central (22), qui permet son réglage dans ladite encoche (12) de ladite plaque (11), et deux crabots transversaux (23) qui, situés aux limites dudit rétrécissement (22), peuvent être couplés par clipsage par rapport à lesdites saillies prismatiques triangulaires (13) prévues au niveau de ladite encoche (12).

11. Canalisation articulée selon une quelconque des revendications 1 à 10, **caractérisée en ce que** des éléments articulés d'extrémité (40, 41) sont prévus qui possèdent des moyens de fixation (35) aux points de sortie d'alimentation (36) et/ou transmission et d'entrée d'un distributeur (37).

12. Canalisation articulée selon la revendication 11, **caractérisée en ce qu'**un (40) desdits éléments articulés d'extrémité possède seulement des moyens de couplage femelle, alors que l'autre (41) desdits éléments articulés d'extrémité possède seulement des moyens de couplage mâle, lesdits éléments articulés d'extrémité (40, 41) étant constitués d'un demi-disque d'extrémité (31, 32) dont le diamètre est solidaire avec une face d'un disque de base (30) qui possède, sur l'un et l'autre côté dudit demi-disque d'extrémité (31, 32) des ouvertures différentes (33, 34) pour le passage sélectif de conducteurs électriques.

13. Canalisation articulée selon la revendication 12, **caractérisée en ce que** lesdits moyens de fixation (35) des éléments articulés d'extrémité (40, 41) sont constitués de crabots de fixation (35) agencés sur la face dudit disque de base (30) opposée à celle qui est solidaire avec ledit demi-disque d'extrémité (31, 32).

14. Canalisation articulée selon les revendications 12 ou 13, **caractérisée en ce que** les moyens de couplage femelle d'un (40) des éléments articulés d'extrémité sont constitués d'une ouverture de coulissement longue située de façon radiale au centre dudit demi-disque d'extrémité, alors que les moyens de couplage mâle de l'autre (41) élément articulé d'extrémité sont égaux à ceux agencés dans le reste des éléments articulés qui constituent la canalisation.
